# EUROPEAN PATENT SPECIFICATION

(11) **EP 1 507 452 B1**
(45) Date of publication and mention of the grant of the patent: **02.04.2008**
(21) Application number: 02778868.6
(22) Date of filing: 24.05.2002
(51) Int. Cl.: B60G 17/005

(54) **INCLINABLE VEHICLE**
NEIGBARES FAHRZEUG
VEHICULE INCLINABLE

(43) Date of publication of application: 23.02.2005
(73) Proprietor: Lehane, Sean, Frankston, Victoria 3199 (AU)
(72) Inventor: Lehane, Sean, Frankston, Victoria 3199 (AU)
(74) Representative: Bridle, Andrew Barry
(86) International application number: PCT/AU2002/000650
(87) International publication number: WO 2002/100160

(56) References cited:
- CH-A5- 586 621
- DE-A1- 2 634 073
- DE-A1- 3 632 416
- FR-A- 1 138 898
- US-A- 2 954 833
- US-A- 3 093 027
- US-A- 3 309 097
- US-A- 3 408 798
- US-A- 3 506 079
- US-A- 4 018 296
- US-A- 5 711 139

## Description

### Background on invention:

The invention was brought about to rectify traditional vehicles inherent instability on steeply sloped undulating terrain.

### Description of prior art:

Inclinable multi-wheeled vehicles are known with articulated suspensions, either by articulating the structure of the vehicle on an axle as described by French Patents 1 526 248 and 1 031 813 (P. Patin) or by a distortable parallelogram or trapezoid system as described in U.S Pat. US 3418 098 (J.E Ward Jr) or by the independent wheel and strut suspension as known in auto mobile technology and described in French Patents 828 405 (F. Maton and 1 207 733 (K.J Lindbom), for example.

Such vehicles have dynamic stability like a two-wheeled vehicle but are not inherently stable when stationary; in fact when the vehicle is stationary a small lateral angular displacement away from the vertical will increase the torque produced by the spaced actions of the weight and the actions of the ground. This will increase the inclination of the vehicle; thus the center of gravity descends and the potential energy of the distortable system reduces as the vehicle inclines more.

In another form of suspension for a three-wheeled vehicle described in US Pat. 3,309 097, pressure cylinders acting through rods and guide arms pivotally joined to an axle work to align the wheels in a vertical configuration regardless of the fact that the vehicle may be on an incline. Because the system relies upon pressure cylinders to maintain the correct wheel alignment, there is always a risk that an unexpected drop in pressure to the cylinders can result in failure of they system. This is particularly a problem if the vehicle is left stationary on a slope for any extended period during which pressure leakage from the cylinders or the hoses connected to the cylinders can result in the wheels losing their vertical configuration and the vehicle toppling over as a result.

### Possible Features of the Invention:

1. The invention may provide in one aspect an all terrain self-leveling chassis/work platform that will handle lateral and longitudinal inclinations up to approximately 45° ground pitch whilst placing its weight evenly on four or more constantly vertical wheels.
2. In another aspect it may provide vehicle axles capable of handling the same or opposite inclinations of up to approx 45° lateral and/or longitudinal ground pitches.
3. In another aspect it may provide selectable all wheel drive and all wheel normal or opposed crab steering.
4. In another aspect it may provide a chassis layout suitable to develop into a variety of multi wheeled vehicles.
5. In its broadest aspect it provides a suspension (1) for a vehicle comprising, forward and rear pairs of wheels (3),
   an axle assembly (5) for each pair of wheels, each axle assembly comprising upper and lower cam rods (7) for each wheel joined by upper and lower pivot joints (9) at their opposite ends to opposed intermediate members (11), and an axle member (13) joined at its opposite ends to the opposed intermediate members by intermediate pivot joints (15) located intermediate the upper and lower pivot joints,
   a chassis assembly (17) extending lengthwise between an adjacent pair of axle assemblies,
   sensing means (19) for sensing the inclination of the chassis assembly with respect to the horizontal across its width,
   pitch trim adjustment means for moving the chassis assembly to lie generally horizontal across its width in response to signals from the sensing means,
   forward and rear cam shafts (20) extending between the chassis assembly and a respective forward or rear axle assembly, the forward and rear axle assemblies being independently rotatable with respect to each other about an axis defined by the cam shafts, and
   a tilt cam (21) for each axle assembly connected to a respective cam shaft and to each of the upper and lower cam rods by upper and lower pivotable tilt cam joints (23),
   characterised in that the forward and rear cam shafts are operatively connected to the axle assemblies via the tilt cams and to the chassis assembly whereby alignment of the chassis assembly to the generally horizontal across its width results in the upper and lower cam rods, axle member and intermediate members being urged by the forward and rear cam shafts to cause the wheels to assume a
   generally vertically directed configuration.

### Description of preferred embodiments of the present invention:

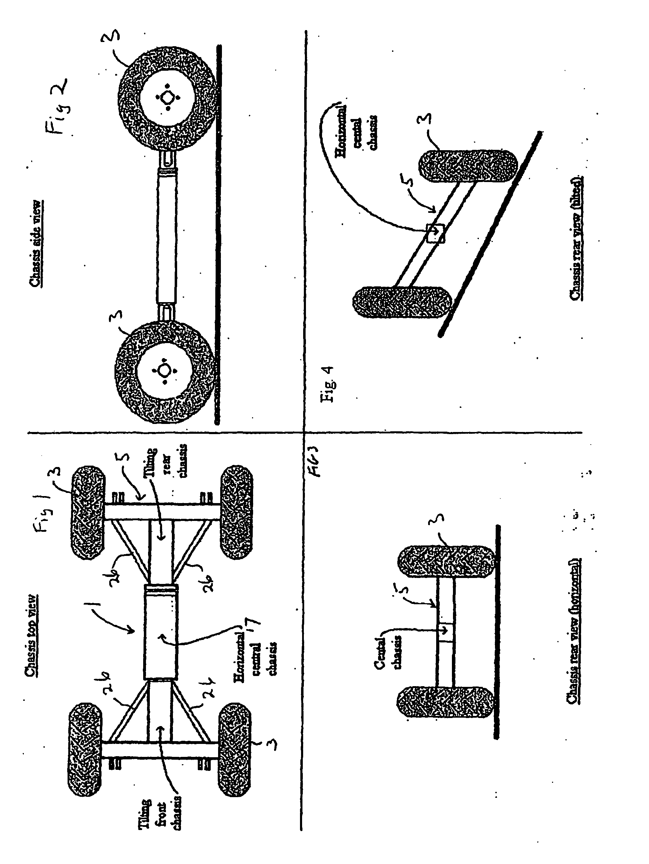

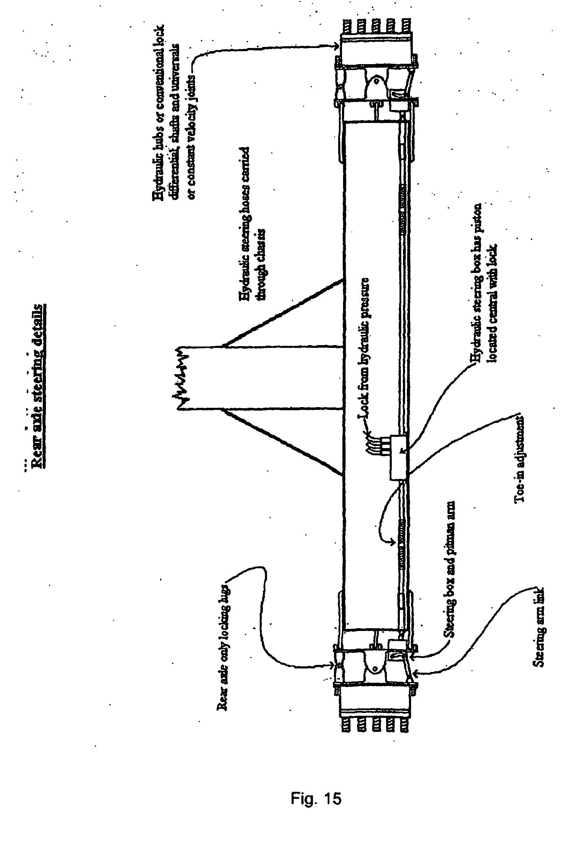

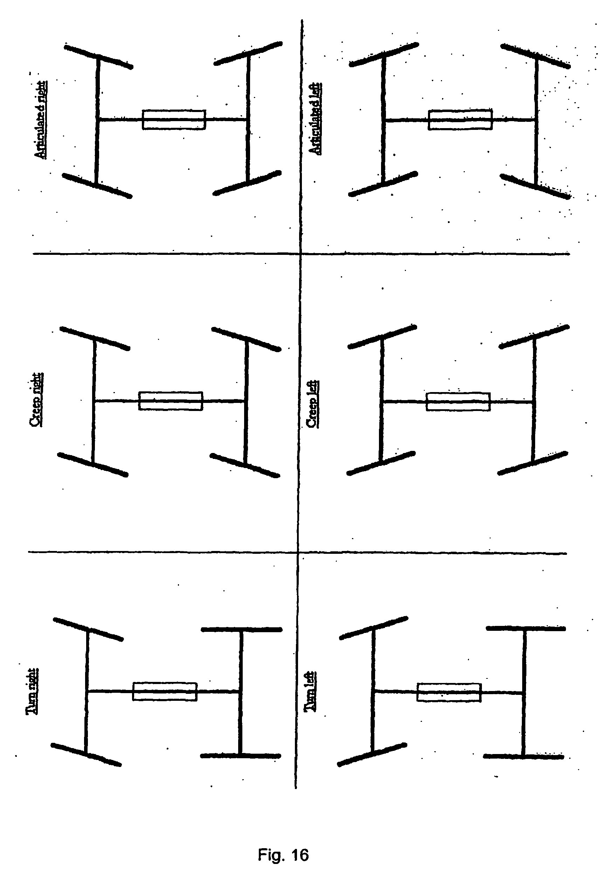

The present invention provides an inclinable multi-wheeled vehicle comprising a primary part and two or more similar secondary parts (Fig. 1-4). The primary part supplying a central chassis/work platform on which to mount a cabin, power plant, equipment or load carrying structure and supplying the pivot points for the two or more secondary parts. The secondary parts are generally but not limited to the forward and rear axles which pivot about the central axis of the primary part and carry differentials, drive shafts, or hydraulic drive systems wheels brakes and steering components (Fig. 15).

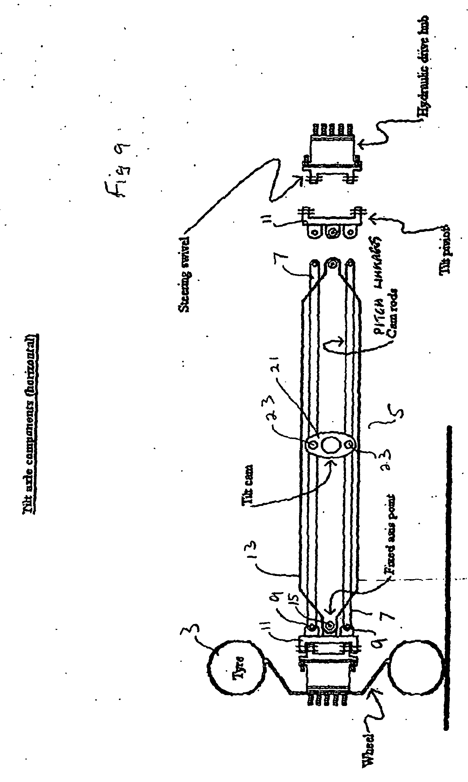

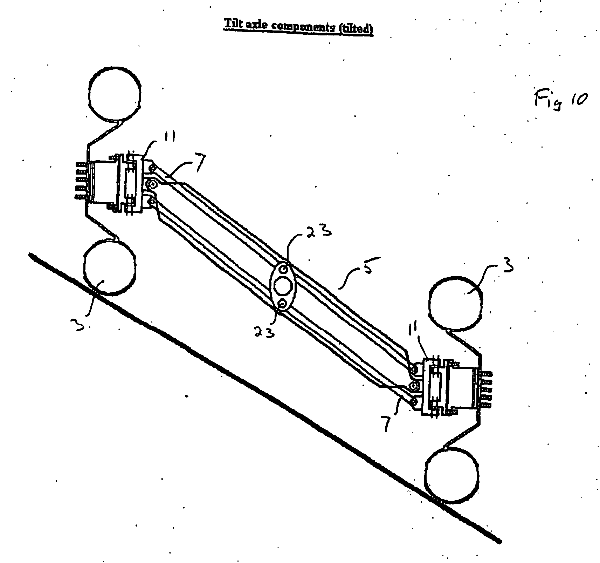

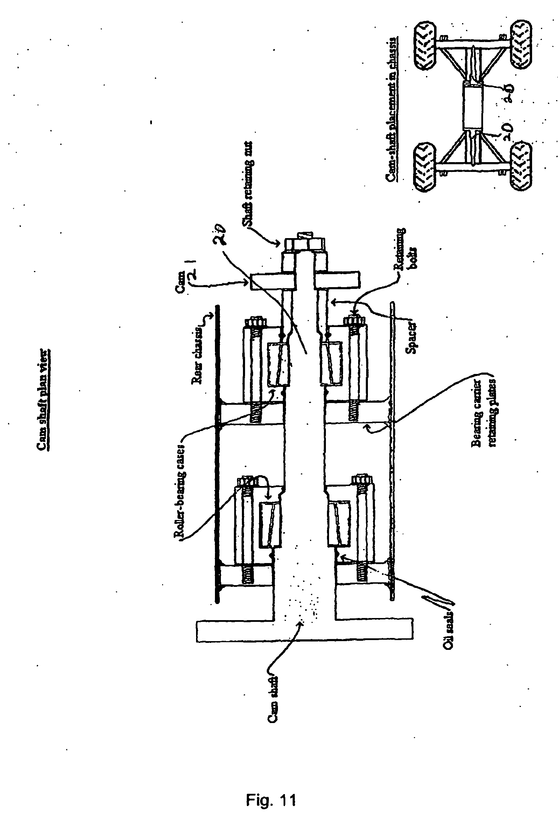

The two or more secondary parts or axles pivot independently to each other. The forward axle always follows the grounds contour. It contains a camshaft (Fig. 11) fixed to the primary part, which commands its internal pitch linkages to pitch its wheels vertically at all times (Fig. 9 & 10).

The rear axle follows an independent ground contour, and as it starts to laterally pitch, it relays this pitch change to the central chassis which recognizes and mechanically adjusts back to level.

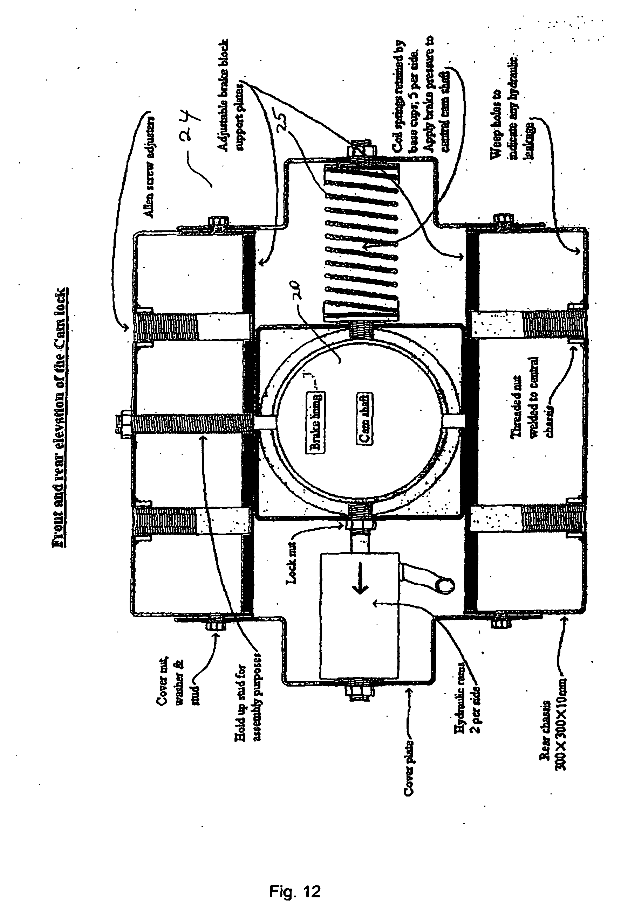

The rear axle is cam controlled by the primary or central chassis (as is the front axle) but also houses a cam lock (Fig. 11 & 12) that locks the rotation of the primary parts about its axis. This lock is a positive mechanical lock that is only unlocked during a pitch trim adjustment.

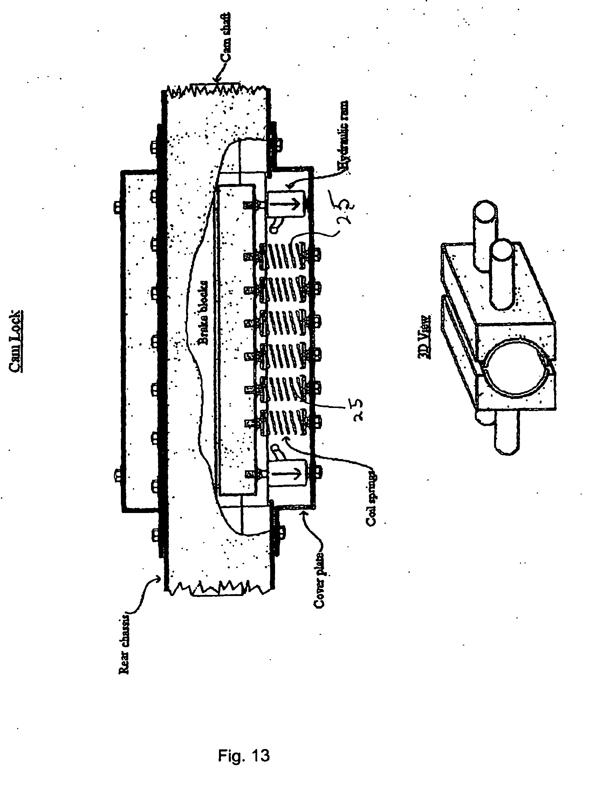

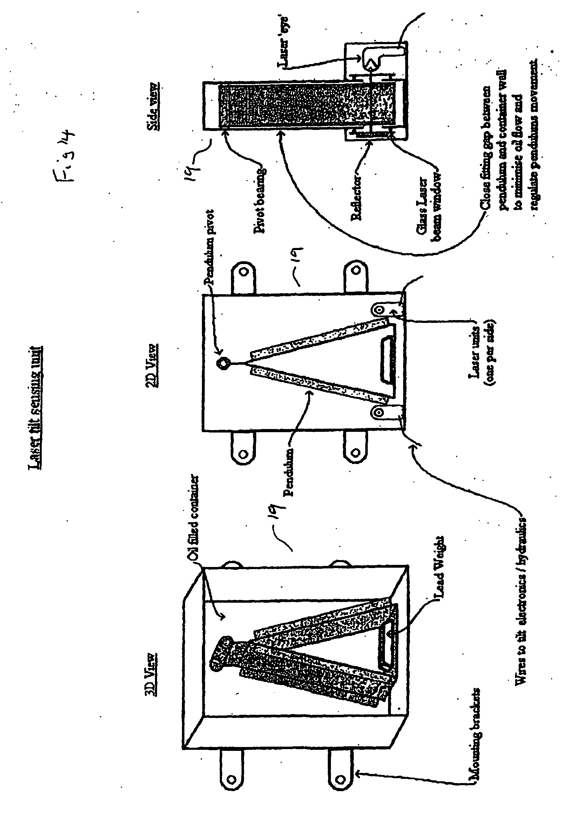

Pitch trim adjustment is by means of hydraulics or a motor that uses inputs to first unlock the cam-lock (Fig 12 & 13) and then to adjust pitch. When level lateral pitch of the central chassis is achieved the
cam-lock relocks to the current lateral pitch of the rear axle. In a three-axle layout where the rear axle may be temporally unloaded, a load sensor will switch between central and rear axles as the moment requires.
- 10: The cam-lock device can be switched off during times of level or near level vehicle travel.
- 15: The torque capacity of the cam-lock is matched to the purpose and load carrying requirements of the particular vehicle.
- 20: An automatic self-leveling sensor (Fig. 14) fixed to the central chassis commands the tilt hydraulics or motor to re-pitch the chassis back to level whenever any tilting is detected.

### Description of Diagrams:

**•** Fig. 1-4 shows a chassis layout in plan, elevation and pitched elevation.

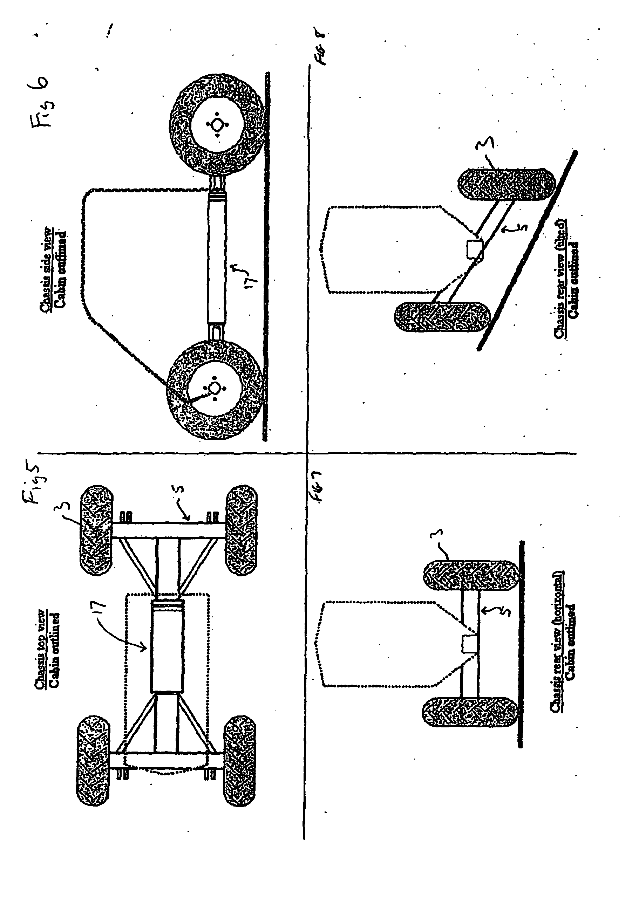

**•** Fig. 5-8 shows a tractor type cabin dotted, on chassis as in figure 1-4.
**•** Fig. 9 & 10 show the central cam and the operation of the pitch linkages. Note that hubs may be hydraulic drive or mechanically driven through the use of a differential or half shafts and universals.
**•** Fig. 11 shows the relationship between the central chassis mounted cam shaft and the front and rear axle housings. The central chassis may carry a third axle across its centerline for six wheeled vehicle applications.
**•** Fig. 12 & 13 show the cam-lock and its relationship to the central chassis and the forward extension of the rear axle. These figures also show the operation of the cam-lock
**•** Fig. 14 shows the laser tilt-sensing unit.
**•** Fig. 15 shows a steering box set up upon each of the four wheels with toe in adjustment, hydraulic and lockable steering box.

## Claims

1. A suspension (1) for a vehicle comprising,
forward and rear pairs of wheels (3),
an axle assembly (5) for each pair of wheels, each axle assembly comprising upper and lower cam rods (7) for each wheel joined by upper and lower pivot joints (9) at their opposite ends to opposed intermediate members (11), and an axle member (13) joined at its opposite ends to the opposed intermediate members by intermediate pivot joints (15) located intermediate the upper and lower pivot joints,
a chassis assembly (17) extending lengthwise between an adjacent pair of axle assemblies,
sensing means (19) for sensing the inclination of the chassis assembly with respect to the horizontal across its width,
pitch trim adjustment means for moving the chassis assembly to lie generally horizontal across its width in response to signals from the sensing means, **characterised by**
forward and rear cam shafts (20) extending between the chassis assembly and a respective forward or rear axle assembly, the forward and rear axle assemblies being independently rotatable with respect to each other about an axis defined by the, cam shafts, and
a tilt cam (21) for each axle assembly connected to a respective cam shaft and to each of the upper and lower cam rods by upper and lower pivotable tilt cam joints (23),
and in that the forward and rear cam shafts are operatively connected to the axle assemblies via the tilt cams and to the chassis assembly whereby alignment of the chassis assembly to the generally horizontal across its width results in the upper and lower cam rods, axle member and intermediate members being urged by the forward and rear cam shafts to cause the wheels to assume a generally vertically directed configuration.

2. A suspension according to claim 1 wherein the chassis assembly comprises a cam lock (24) for locking rotation of the axle assemblies with respect to the chassis assembly.

3. A suspension according to claim 2 wherein the cam lock is a positive mechanical lock arranged to unlock during pitch trim adjustment.

4. A suspension according to claim 3 wherein the positive mechanical lock comprises a spring (25) loaded brake block arranged to lock rotation of at least one of the axle assemblies.

5. A suspension according to any one of the preceding claims wherein the pitch trim adjustment means comprises a motorised or hydraulically driven device.

6. A suspension according to any one of the preceding claims comprising a steering box set up for each wheel.

7. A suspension according to any one of the preceding claims comprising a pair of reinforcing members (26) joining and extending between the chassis assembly and an axle assembly the reinforcing members being arranged to brace the axle assembly.

8. A vehicle comprising a cabin mounted on the chassis assembly of a suspension according to any one of claims 1 to 7.

## Patentansprüche

1. Aufhängung (1) für ein Fahrzeug, umfassend,
vordere und hintere Radpaare (3),
eine Achsanordnung (5) für jedes Radpaar, wobei jede Achsanordnung obere und untere Nockenstangen (7) für jedes Rad aufweist, die durch obere und untere Schwenkverbindungen (9) an ihren entgegengesetzten Seiten mit gegenüberliegenden Zwischenelementen (11) verbunden sind, und ein Achselement (13), das an seinen entgegengesetzten Enden mit den gegenüberliegenden Zwischenelementen durch Zwischenschwenkverbindungen (15) verbunden ist, die zwischen den oberen und unteren Schwenkverbindungen angeordnet sind,
eine Chassisanordnung (17), die sich in Längsrichtung zwischen einem benachten Paar von Achsanordnungen erstreckt,
Sensiermittel (19) zum Erfassen der Neigung der Chassisanordnung bezüglich der Horizontalen über deren Breitenerstreckung,
Abstandanpasseinstellmittel zum Bewegen der Chassisanordnung derart, dass sie im wesentlichen horizontal über ihre Breitenerstreckung in Antwort auf Signale von den Sensiermitteln liegt, **gekennzeichnet durch**
vordere und hintere Nockenwellen (20), die sich zwischen der Chassisanordnung und der jeweiligen vorderen und hinteren Achsanordnung erstrecken, wobei die vordere und hintere Achsanordnung unabhängig zueinander um eine Achse rotierbar sind, die von den Nockenwellen definiert ist, und
ein Schwenknocke (21) für jede Achsanordnung, die mit einer jeweiligen Nockenwelle und zu jeder der oberen und unteren Nockenstangen **durch** obere und untere schwenkbare Schwenknockenverbindungen (23) verbunden ist,
und **dadurch**, dass die vorderen und hinteren Nockenwellen betriebsmäßig mit der Achsanordnung über die Schwenknocken und mit der Chassisanordnung verbunden sind, wodurch eine Ausrichtung der Chassisanordnung zu der allgemeinen Horizontalen über deren Breitenerstreckung dazu führt, dass die oberen und unteren Nockenstangen, das Achselement und die Zwischenelemente **durch** die vorderen und hinteren Nockenwellen bewirken, dass die Räder eine im wesentlichen vertikal ausgerichtete Konfiguration aufweisen.

2. Aufhängung nach Anspruch 1, wobei die Chassisanordnung eine Nockenverriegelung (24) zum Verriegeln der Drehung der Achsanordnungen bezüglich der Chassisanordnung aufweist.

3. Aufhängung nach Anspruch 2, wobei die Nockenverriegelung eine positive mechanische Verriegelung ist, die dazu angepasst ist, während einer Abstandanpasseinstellung zu entriegeln.

4. Aufhängung nach Anspruch 3, wobei die positive mechanische Verriegelung einen durch eine Feder (25) vorgespannten Bremsblock umfasst, der derart angeordnet ist, dass er eine Drehung wenigstens einer der Achsanordnungen sperrt.

5. Aufhängung nach einem der vorangehenden Ansprüche, wobei die Abstandanpasseinstellmittel eine motorisch oder hydraulisch angetriebene Vorrichtung aufweist.

6. Aufhängung nach einem der vorangehenden Ansprüche, umfassend eine Lenkboxeinstellung für jedes Rad.

7. Aufhängung nach einem der vorangehenden Ansprüche, umfassend ein Paar von Verstärkungselementen (26), die die Chassisanordnung und die Achsanordnung miteinander verbinden und sich zwischen diesen erstrecken, wobei die Verstärkungselemente derart angeordnet sind, dass sie die Achsanordnung aufspannen.

8. Fahrzeug umfassend eine Kabine, die auf der Chassisanordnung einer Aufhängung gemäß einer der Ansprüche 1 bis 7 angebracht ist.

## Revendications

1. Suspension (1) pour un véhicule comprenant,
des paires de roues avant et arrière (3),
un ensemble formant essieu (5) pour chaque paire de roues, chaque ensemble formant essieu comprenant des tiges de came supérieure et inférieure (7) pour chaque roue reliées par des joints de pivot supérieur et inférieur (9) au niveau de leurs extrémités opposées à des éléments intermédiaires opposés (11), et un élément d'essieu (13) relié au niveau de ses extrémités opposées aux éléments intermédiaires opposés par des joints de pivot intermédiaires (15) situés de manière intermédiaire par rapport aux joints de pivot supérieur et inférieur,
un ensemble formant châssis (17) s'étendant dans le sens de longueur entre une paire d'ensembles formant essieu adjacents,
des moyens de détection (19) destinés à détecter l'inclinaison de l'ensemble formant châssis par rapport à l'horizontale, suivant sa largeur,
un moyen d'ajustement de réglage de tangage destiné à de déplacer l'ensemble de châssis afin qu'il repose sensiblement horizontalement suivant sa largeur en réponse à des signaux provenant des moyens de détection, **caractérisée par**
des arbres de came avant et arrière (20) s'étendant entre l'ensemble de châssis et un ensemble formant essieu avant ou arrière respectif, les ensembles formant essieu avant et arrière pouvant tourner indépendamment l'un par rapport à l'autre autour d'un axe défini par les arbres de came, et
une came de basculement (21) pour chaque ensemble formant essieu, couplée à un arbre de came respectif et à chacune des tiges de came supérieure et inférieure par des joints de came de basculement supérieur et inférieur (23),
et en ce que lesdits arbres de came avant et arrière sont couplés de manière opérationnelle aux ensembles formant essieu par l'intermédiaire des cames de basculement et à l'ensemble formant châssis, de telle sorte que l'alignement de l'ensemble formant châssis sensiblement à l'horizontale suivant sa largeur conduit à ce que les tiges de came supérieure et inférieure, l'élément d'essieu et les éléments intermédiaires sont appliqués par les arbres de came avant et arrière de manière à amener les roues à prendre une configuration dirigée sensiblement verticalement.

2. Suspension selon la revendication 1, dans laquelle l'ensemble formant châssis comprend un verrou à came (24) afin de verrouiller la rotation des ensembles formant essieu par rapport à l'ensemble formant châssis.

3. Suspension selon la revendication 2, dans laquelle le verrou à came est un verrou mécanique positif agencé de manière à se déverrouiller au cours de l'ajustement de réglage de tangage.

4. Suspension selon la revendication 3, dans laquelle le verrou mécanique positif comprend un bloc de freinage chargé par ressort (25) agencé de manière à verrouiller la rotation d'au moins l'un des ensembles formant essieu.

5. Suspension selon l'une quelconque des revendications précédentes, dans laquelle le moyen d'ajustement de réglage de tangage comprend un dispositif motorisé ou entraîné de manière hydraulique.

6. Suspension selon l'une quelconque des revendications précédentes, comprenant un boîtier de direction agencé pour chaque roue.

7. Suspension selon l'une quelconque des revendications précédentes, comprenant une paire d'éléments de renforcement (26) reliant l'ensemble de châssis et un ensemble formant essieu et s'étendant entre ceux-ci, les éléments de renforcement étant agencés de manière à rigidifier l'ensemble formant essieu.

8. Véhicule comprenant une cabine montée sur l'ensemble formant châssis d'une suspension selon l'une quelconque des revendications 1 à 7.
